# EUROPEAN PATENT APPLICATION

(11) **EP 4 632 829 A2**
(43) Date of publication of application: **15.10.2025**
(21) Application number: 25169201.8
(22) Date of filing: 08.04.2025
(51) Int. Cl.: H01M 4/04, B05D 1/30, B21D 26/14, B29C 31/02, B30B 11/02, B30B 15/30, H01M 4/139

(54) **DRY ELECTRODE MANUFACTURING DEVICE AND MANUFACTURING METHOD OF THE SAME**

(30) Priority: 09.04.2024 KR 20240048174
(71) Applicant: SAMSUNG SDI CO., LTD., Yongin-si, Gyeonggi-do 17084 (KR)
(72) Inventor: KIM, KANGMIN, 17084 Yongin-si, Gyeonggi-do (KR); KIM, SANGPIL, 17084 Yongin-si, Gyeonggi-do (KR); YEON, DONG HEE, 17084 Yongin-si, Gyeonggi-do (KR); LEE, JINHYON, 17084 Yongin-si, Gyeonggi-do (KR); LEE, GAEON, 17084 Yongin-si, Gyeonggi-do (KR)
(74) Representative: Gulde & Partner

(57) **Abstract**

A dry electrode manufacturing device is disclosed. The dry electrode manufacturing device may include an inserting part to supply electrode powder for dry electrode manufacturing, a guide chute to pass through the electrode powder supplied from the inserting part, a dispersing rod that is provided in the guide chute to disperse the electrode powder and adjust particle size distribution, a driver that moves at least one selected from among the guide chute and the dispersing rod by applying an external force, and a rolling roll to compress the electrode powder of the adjusted particle size distribution via the guide chute and the dispersing rod into an electrode member in the form of a sheet that has a set or predetermined thickness.

## Description

### BACKGROUND

### 1. Field

One or more embodiments of the present disclosure relate to a dry electrode manufacturing device and a manufacturing method of the dry electrode manufacturing device, and, for example, to a dry electrode manufacturing device for manufacturing a sheet-type or kind dry electrode using powder and a manufacturing method of the dry electrode manufacturing device.

### 2. Description of the Related Art

Unlike primary batteries, rechargeable batteries are batteries that repeatedly charge and discharge. Small-capacity rechargeable batteries are commonly found in (e.g., used in) small, portable electronic devices, such as mobile phones, laptop computers, and/or camcorders. On the other hand, high-capacity and high-density rechargeable batteries are used to power motors in hybrid and/or electric vehicles and/or are used for energy storage (e.g., as power sources for driving motors in hybrid and/or electric vehicles and/or for energy storage).

A rechargeable battery includes an electrode assembly for charging and discharging current, a case or pouch accommodating the electrode assembly and an electrolyte, and an electrode terminal that is connected or coupled to the electrode assembly and drawn out of the case or pouch. The electrode assembly may be a jelly-roll type or kind, which is provided by winding an electrode and a separator, or a stack type or kind, which is provided by stacking the electrode and a separator.

In the electrode manufacturing process, in addition to the active material, which is the main component of the electrode, a conductive material (e.g., an electrically conductive material), a filler material, and a binder are mixed with a solvent to provide a fluid slurry, which is sprayed or applied onto a current collector, coated, and the liquid solvent is dried. However, in the wet method, undesirable defects may occur due to differences in evaporation speed between the surface and the interior during the drying process of the solvent. Therefore, operation of drying equipment is challenging, resulting in economic and/or time losses.

To solve this issue, dry methods have been studied or pursued. The dry method allows for manufacturing a free standing film through a rolling process in which dry powder that is mixed with solid powdery active materials, binders, conductive materials (e.g., electrically conductive materials) is passed between two rolling rolls by not using a solvent. An electrode is manufactured by laminating the free standing film on a current collector.

Because the dry method may not need to provide the drying process, thicker thick film electrode plates may be manufactured compared to the wet method. Therefore, the dry method may allow for increase in the energy density of rechargeable batteries. However, the dry method may still cause uneven (e.g., inconsistent) formability, tensile strength, and mechanical properties of the self-supporting film due to particle size segregation that inevitably occurs in the process of mixing, transporting, and/or feeding dry powder. That is, the dry method may increase the energy density of rechargeable batteries by allowing for thicker electrode plates, but it may cause uneven formability and mechanical properties due to particle size segregation.

Particle size segregation is a phenomenon in which particles having different sizes and densities are mixed and placed in a certain state of motion, resulting in an uneven (e.g., inconsistent) mixture of particles. Therefore, it is desired or required to suppress or reduce particle size segregation of dry powder (e.g., narrow particle size distribution or particle sizes with a narrow distribution), expand the width of the self-supporting film, and/or speed up production. For example, a dry electrode manufacturing device for dispersing powder efficiently and uniformly (e.g., substantially uniformly) and a manufacturing method of the dry electrode manufacturing device are desired or required. In other words, it is necessary or desired to suppress particle size segregation to ensure uniformity and efficiency in dry electrode manufacturing.

### SUMMARY

One or more aspects of embodiments of the present disclosure are directed toward a dry electrode manufacturing device for manufacturing a dry electrode by uniformly (e.g., substantially uniformly) dispersing an electrode powder for manufacturing the dry electrode. One or more aspects of embodiments of the present disclosure are directed toward a dry electrode manufacturing method for manufacturing a dry electrode by uniformly (e.g., substantially uniformly) dispersing an electrode powder for manufacturing the dry electrode by using the dry electrode manufacturing device.

One or more aspects of embodiments of the present disclosure are directed toward a dry electrode manufacturing device for manufacturing a dry electrode while removing dry powder that is attached to a dispersing rod or removing metal foreign substances (e.g., undesirable metal impurities) mixed in the dry powder. One or more aspects of embodiments of the present disclosure are directed toward a dry electrode manufacturing method for manufacturing a dry electrode while removing dry powder that is attached to a dispersing rod of a dry electrode manufacturing device or removing metal foreign substances (e.g., undesirable metal impurities) mixed in the dry powder.

Additional aspects will be set forth in part in the description which follows and, in part, will be apparent from the description, or may be learned by practice of the presented embodiments of the disclosure.

A dry electrode manufacturing device according to one or more embodiments of the present disclosure may include an inserting part to supply electrode powder for dry electrode manufacturing, a guide chute to pass through the electrode powder supplied from the inserting part, a dispersing rod that is installed (or provided or arranged) in the guide chute to disperse the electrode powder and adjust particle size distribution (e.g., narrow particle size distribution), a driver that moves at least one selected from among the guide chute and the dispersing rod by applying an external force, and a rolling roll to compress the electrode powder of the adjusted particle size distribution via the guide chute and the dispersing rod into an electrode member in the form of a sheet having a set or predetermined thickness.

The driver may be connected or coupled to the dispersing rod and to provide torque or vibration force to the dispersing rod.

The driver may further provide vibration force to the guide chute.

The dispersing rod may be of a round rod or a triangular rod.

The dispersing rod may be provided or arranged in plurality along the width direction of the guide chute. A plurality of dispersing rods that include the dispersing rod may be provided or arranged with each other along a width direction of the guide chute.

A plurality of dispersing rods that include the dispersing rod may be arranged with each other along a height direction of the guide chute. That is, the dispersing rods may be arranged along both the width and height directions of the guide chute.

That is, a plurality of dispersing rods that include the dispersing rod may include at least an upper first row and at least one a lower second row spaced and/or apart (e.g., spaced apart or separated) from each other (or a lower second row spaced from the upper first row) in a height direction of the guide chute. The number of the dispersing rods of the lower second row may be one more than the number of dispersing rods of the upper first row, and based on a width direction of the guide chute, the dispersing rods of the upper first row may be arranged or provided one by one correspondingly between the plurality of dispersing rods of the lower second row.

In order words, the dispersing rods may be provided in multiple rows, including the upper first row and the lower second row, spaced from each other in the height direction of the guide chute. The lower second row may have one more dispersing rod than the upper first row, with each rod in the upper row positioned between the rods of the lower row along the width direction.

The dispersing rods of the upper first row and the dispersing rods of the lower second row may have substantially the same diameter. In other words, the dispersing rods in both the upper first row and the lower second row may have substantially the same diameter.

The dispersing rods that include the dispersing rod may further include a third row below the lower second row, and the dispersing rods of the third row and the dispersing rods of the lower second row may have substantially the same diameter. In other words, the dispersing rods may include the third row below the lower second row, with the rods in both the third and lower second rows having substantially the same diameter.

Each of the dispersing rods of the upper first row may have a first diameter, and each of the dispersing rods of the lower second row may have a second diameter smaller than the first diameter.

The dispersing rods that may include the dispersing rod may further include a third row below the lower second row, and each of the dispersing rods of the third row may have a third diameter smaller than the second diameter. The dispersing rods may include the third row below the lower second row, and each of the dispersing rods of the third row may have the third diameter smaller than the second diameter. In other words, the dispersing rods may include the third row below the lower second row, with the rods in the third row having a diameter smaller than those in the second row.

The driver may be connected or coupled to the guide chute and provide vibration force to the guide chute.

A dry electrode manufacturing device according to one or more embodiments of the present disclosure may include an inserting part to supply electrode powder for dry electrode manufacturing, a guide chute to pass through the electrode powder supplied from the inserting part, a dispersing rod that is installed (or provided or arranged) in the guide chute to disperse the electrode powder and adjust particle size distribution (e.g., narrow particle size distribution), and a rolling roll to compress the electrode powder of the adjusted particle size distribution via the guide chute and the dispersing rod into an electrode member in the form of a sheet having a set or predetermined thickness, wherein the dispersing rod may be of a magnetic material.

The dispersing rod may be of a permanent magnet.

A dry electrode manufacturing device according to one or more embodiments of the present disclosure may further include a power supplier that is connected or coupled to the dispersing rod and to supply power to the dispersing rod to form the dispersing rod into an electromagnet.

A dry electrode manufacturing method according to one or more embodiments of the present disclosure may include a first step (e.g., act or task) of supplying electrode powder for dry electrode manufacturing to a guide chute through an inserting part, a second step (e.g., act or task) of passing through the electrode powder and adjusting the particle size distribution (e.g., to provide narrow particle size distribution) of the supplied electrode powder by the dispersing action of a dispersing rod installed (or provided or arranged) in the guide chute, a third step (e.g., act or task) of moving at least one selected from among the guide chute and the dispersing rod by applying an external force, and a fourth step (e.g., act or task) of compressing the electrode powder to have an adjusted particle size via the guide chute and the dispersing rod into an electrode member in the form of a sheet having a set or predetermined thickness on a rolling roll.

In the third step, the electrode powder may pass while providing torque or vibration force to the dispersing rod. That is, the electrode powder may pass through while torque or vibration force is applied to the dispersing rod.

In the third step (e.g., act or task) (e.g., in the moving of the at least one selected from among the guide chute and the dispersing rod by applying the external force), vibration force may be further provided to the guide chute.

A dry electrode manufacturing method according to one or more embodiments of the present disclosure may include a first step (e.g., act or task) of supplying electrode powder for dry electrode manufacturing to a guide chute through an inserting part, a second step (e.g., act or task) of passing through the electrode powder and adjusting the particle size distribution (e.g., to provide narrow particle size distribution) of the supplied electrode powder by the dispersing action of a dispersing rod installed (or provided or arranged) in the guide chute, a third step (e.g., act or task) of removing metal foreign substances (e.g., undesirable metal impurities) in the electrode powder by providing magnetic force from the dispersing rod of a magnetic material, and a fourth step (e.g., act or task) of compressing the electrode powder to have an adjusted particle size via the guide chute and the dispersing rod into an electrode member in the form of a sheet having a set or predetermined thickness on a rolling roll.

In the third step (e.g., act or task) (e.g., in the removing of the metal foreign substances in the electrode powder by providing the magnetic force from the dispersing rod of the magnetic material), a power supplier may be connected or coupled to the dispersing rod and to supply power to the dispersing rod to form the dispersing rod into an electromagnet.

As such, according to one or more embodiments of the present disclosure, it may disperse the electrode powder to a substantially uniform particle size distribution (e.g., narrow particle size distribution) by installing (or providing or arranging) a dispersing rod in a guide chute through which the electrode powder is passed, and applying an external force to the guide chute or the dispersing rod to move the guide chute or the dispersing rod, thereby dispersing the powder in the width direction of the guide chute.

Thus, according to one or more embodiments of the present disclosure, it may disperse the electrode powder in a substantially uniform particle size distribution by installing (or providing or arranging) a dispersing rod in a guide chute through which the electrode powder is passed, providing the dispersing rod having a magnetic material, thereby dispersing the powder in the width direction of the guide chute while removing metal foreign substances (e.g., undesirable metal impurities) by attaching them on the dispersing rod.

In summary, embodiments of the present disclosure enable the dispersion of electrode powder to a substantially uniform particle size distribution by installing a dispersing rod in a guide chute and applying an external force to move the rod or chute, thereby dispersing the powder in the width direction. Additionally, using a magnetic dispersing rod may help remove metal impurities while achieving uniform dispersion.

### BRIEF DESCRIPTION OF THE DRAWINGS

FIG. 1 is a schematic view of a dry electrode manufacturing device according to the one or more embodiments of the present disclosure.
FIG. 2 is an internal perspective view of a guide chute of FIG. 1.
FIG. 3 is an internal perspective view illustrating the guide chute in FIG. 1.
FIG. 4 is an internal perspective view illustrating the guide chute in a dry electrode manufacturing device according to one or more embodiments of the present disclosure.
FIG. 5 is a schematic view of a dry electrode manufacturing device according to one or more embodiments of the present disclosure.
FIG. 6 is a schematic view of a dry electrode manufacturing device according to one or more embodiments of the present disclosure.
FIG. 7 is a schematic view of a dry electrode manufacturing device according to one or more embodiments of the present disclosure.
FIG. 8 is a flowchart of a dry electrode manufacturing method according to one or more embodiments of the present disclosure.
FIG. 9 is a flowchart of a dry electrode manufacturing method according to one or more embodiments of the present disclosure.

### DETAILED DESCRIPTION

The present disclosure will be described more fully hereinafter with reference to the accompanying drawings, in which embodiments of the present disclosure are shown. As those skilled in the art would realize, the described embodiments may be modified in one or more suitable different ways, all without departing from the scope of the present disclosure. The drawings and description are to be regarded as illustrative in nature and not restrictive. Like reference numerals designate like elements throughout, and duplicative descriptions thereof may not be provided in the specification.

Although terms of "first," "second," and/or the like are used to illustrate one or more suitable constituent elements, the constituent elements are not limited to such terms. These terms are only used to distinguish one constituent element from another constituent element.

It is to be understood that if (e.g., when) one component is referred to as being "connected" or "coupled" to another component, it may be connected or coupled directly to another component or there may be other intervening components. In contrast, it is to be understood that if (e.g., when) one component is referred to as being "connected or coupled directly" to another component, there are no other intervening components.

Throughout the specification, the terms, "include" or "have," are intended to specify the presence of stated features, integers, steps, operations, constituent elements, components and/or a (e.g., any suitable) combination thereof, but do not preclude the presence or addition of one or more other features, integers, steps, operations, constituent elements, components, and/or groups thereof. Therefore, unless explicitly described to the contrary, the term, "include," and variations, such as "includes" or "including," will be understood to imply the inclusion of stated elements but not the exclusion of any other suitable elements.

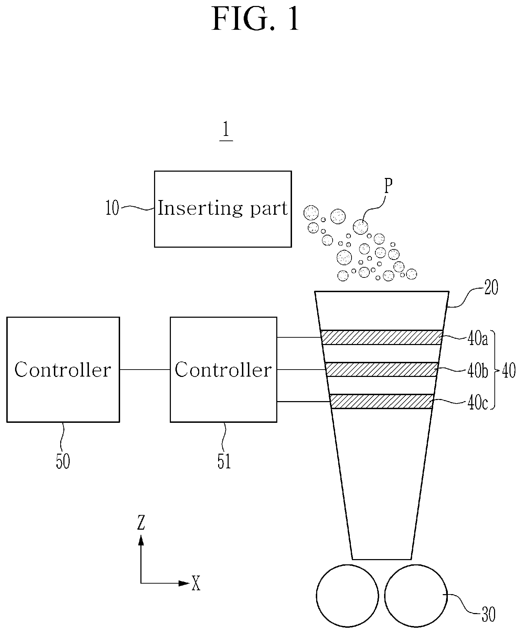

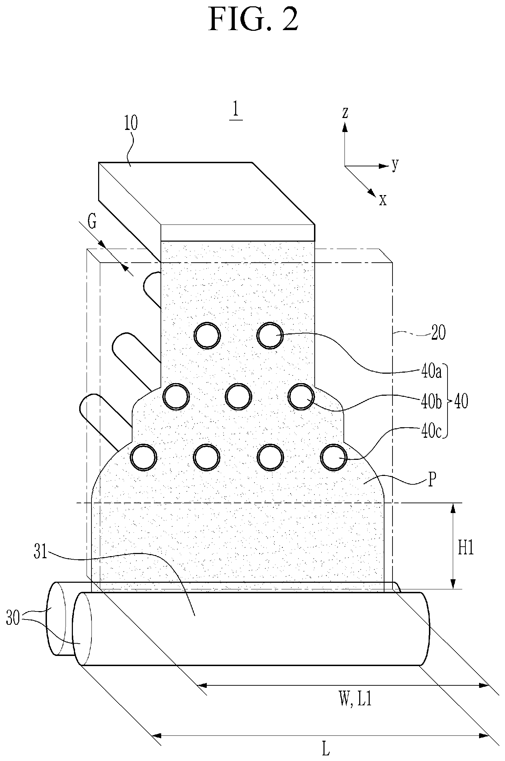

FIG. 1 is a schematic view of a dry electrode manufacturing device according to one or more embodiments of the present disclosure, and FIG. 2 is an internal perspective view of a guide chute of FIG. 1. Referring to FIGS. 1-2, a dry electrode manufacturing device 1 of one or more embodiments may include an inserting part 10, a guide chute 20, a dispersing rod 40, a driver 50, and a rolling roll 30 to uniformly (e.g., substantially uniformly) disperse a powder P for manufacturing a dry electrode to manufacture a dry electrode for a rechargeable battery.

The dry electrode manufacturing device 1 may allow manufacturing electrodes for rechargeable batteries using a dry method. For example, the dry electrode manufacturing device 1 may insert the dry powder P from the top of the rolling roll 30 to maintain a height H1 at a level set in the guide chute 20, and pass the powder P maintaining the height H1 through the rolling roll 30 and compress the powder P on the rolling roll 30, thereby manufacturing an electrode member in the form of a film or sheet.

At this time, the dry electrode manufacturing device 1 may be configured or provided to uniformly (e.g., substantially uniformly) distribute the particle size in the width direction (y-axis direction) after the dry powder P is added, despite the particle size segregation phenomenon that may occur if (e.g., when) the powder P is inserted. The width direction (y-axis direction) may correspond to a width W of the guide chute 20 and a length L of the rolling roll 30. The length L of the rolling roll 30 may be larger than the width W of the inserting part 10 and the guide chute 20 (L>W).

The dry electrode manufacturing device 1 may be configured or provided to insert the dry powder P such that the dry power P has a substantially uniform particle size distribution in the width direction (y-axis direction) even under conditions where the width W of the guide chute 20 and the height H set between the inserting part 10 and the rolling roll 30 are limited.

The inserting part 10 uniformly (e.g., substantially uniformly) may distribute the powder P inserted into a dispersing rod of first row 40a, a dispersing rod of second row 40b, and a dispersing rod of third row 40c in the width direction (y-axis direction) and supply the powder P to the guide chute 20. The guide chute 20 may be configured or provided to pass the electrode powder P uniformly (e.g., substantially uniformly) supplied from the inserting part 10 in the width direction (y-axis direction) by dispersing the powder P according to the width W of the guide chute 20.

For example, the guide chute 20 may have a gap G set to allow the electrode powder P to pass and the width W corresponding to a length L1 of a rolling part 31 of the rolling roll 30 (L1=W). The guide chute 20 may maintain the height H1 of the stacking level set at the top of the rolling roll 30 for the electrode powder P. The stacking level may be set between the dispersing rod 40 and the rolling roll 30, so that the powder P advantageously may be continuously supplied to the rolling roll 30 while maintaining the width W.

The dispersing rod 40 may be installed (or provided or arranged) in the guide chute 20 and may be configured or provided to distribute the electrode powder P with a substantially uniform particle size. The dispersing rod 40 may be installed (or provided or arranged) in the guide chute 20 and disperse the electrode powder P falling from the inserting part 10 to the rolling roll 30 in the width direction (y-axis direction), thereby adjusting the particle size distribution in the width direction. Therefore and advantageously, the dry powder P may be dispersed and inserted with a substantially uniform particle size distribution in the width direction (y-axis direction).

For example, the dispersing rod 40 may be a round rod. The curved surface of the round rod may face the width direction. Therefore, the round rod may send the powder P having a large particle size far in the width direction (y-axis direction) while colliding with some of the powder P that may fall from the inserting part 10 to the guide chute 20. That is, the dispersing rod 40 may be formed as a round rod with its curved surface oriented to send larger particles of powder P farther in the width direction (y-axis) while colliding with some of the powder falling from the inserting part 10 to the guide chute 20.

Additionally, the powder P having a relatively small particle size may fall smoothly along the curved surface of the round rod. The dispersing action and the particle size distribution adjusting action of the dispersing rod 40 may enable a more substantially uniform particle size distribution of the powder P in the width direction (y-axis direction) of the guide chute 20.

The dispersing rod may be a triangular rod. An inclined surface of the triangular rod may face both (e.g., simultaneously) sides (e.g., two opposite sides) in the width direction. Therefore, the triangular rod may provide an inclined surface to the powder P falling from the inserting part 10 to the guide chute 20 and guide the powder P to the inclined surface, thereby sending the powder P in the width direction (y-axis direction). That is, the dispersing rod may be formed as a triangular rod with an inclined surface oriented towards opposite sides in the width direction. This design allows the triangular rod to guide the powder P falling from the inserting part 10 to the guide chute 20, thereby sending the powder P in the width direction (y-axis). The dispersing action and the particle size distribution adjusting action of the dispersing rod may enable a more substantially uniform particle size distribution of the powder P in the width direction (y-axis direction) of the guide chute 20.

The dispersing rod may have a cross-sectional shape with an inclination angle greater than the angle of repose of the powder P. Therefore and advantageously, the powder P may be prevented or reduced from remaining on the dispersing rod (or a degree or occurrence of the power P remaining on the dispersing rod may be reduced). Additionally, the dispersing rod may be an inverted V-shaped or a polygonal rod.

The driver 50 may apply an external force to at least one selected from among the guide chute 20 and the dispersing rod 40 to move it. For example, the driver 50 may be connected or coupled to the dispersing rod 40 and to provide a torque or vibration force to the dispersing rod 40, so that the dispersing rod 40 may rotate or vibrate.

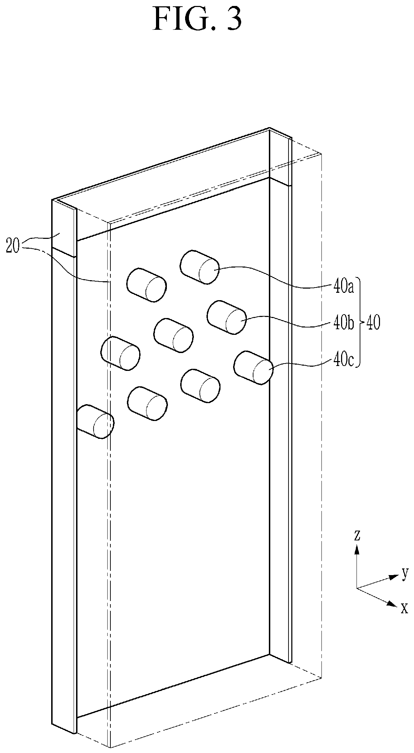

FIG. 3 is an internal perspective view illustrating the guide chute in FIG. 1. Referring to FIGS. 1-3, the dispersing rods 40 may be arranged or provided in plurality along the width direction (y-axis direction) of the guide chute 20. Advantageously, the plurality of dispersing rods 40 may increase the size of the guide chute 20 in the width direction (y-axis direction), thereby improving or enhancing the productivity of the dry electrode.

The dispersing rods 40 may be arranged or provided in plurality along the height direction (z-axis direction) of the guide chute 20. The plurality of dispersing rods 40 along the height direction (z-axis direction) of the guide chute 20 may repeatedly perform the process of substantially uniformizing the particle size distribution of the powder P in the height direction, thereby making the overall particle size distribution of the power P more substantially uniform. That is, the dispersing rods 40 may be arranged along the height direction (z-axis) of the guide chute 20 to repeatedly uniformize the particle size distribution of the powder P, resulting in a more uniform overall particle size distribution.

The dispersing rods 40 may include the upper first row and the lower second row spaced and/or apart (e.g., spaced apart or separated) in the height direction (z-axis direction) of the guide chute 20. The number of the dispersing rods of second row 40b may be one more than the number of the dispersing rods of first row 40a, and based on the width direction (y-axis direction), the dispersing rods of first row 40a may be arranged or provided one by one correspondingly between the dispersing rods of second row 40b. That is, the dispersing rods 40 may include an upper first row and a lower second row, spaced from each other in the height direction (z-axis), with the second row having one more rod than the first row, and the rods in the first row positioned between those in the second row along the width direction (y-axis).

For example, the dispersing rods of first row 40a may be provided in two rods to disperse the powder P first in the width direction, and the dispersing rods of second row 40b may be provided in three rods, which may be one more than the number of the dispersing rods of first row 40a, to disperse the powder P second time in the width direction. In other words, the first row of dispersing rods 40a may have two rods to initially disperse the powder P in the width direction, while the second row 40b may have three rods to disperse the powder P a second time in the width direction.

The dispersing rods of first row 40a and the dispersing rods of second row 40b may have substantially the same diameter. The dispersing rods of first row 40a and the dispersing rods of second row 40b may send the powder P falling temporarily and stepwise in the width direction (y-axis direction) and height direction (z-axis direction) of the guide chute 20 in the width direction (y-axis direction) and gently fall along the curved surface of the round rod. Due to the dispersing and adjusting action of the dispersing rod 40, the powder P may be dispersed and inserted with a more substantially uniform particle size distribution in the width direction (y-axis direction) of the guide chute 20. That is, the dispersing rods in the first and second rows may have the same diameter and guide the powder P to fall stepwise in both the width (y-axis) and height (z-axis) directions, resulting in a more uniform particle size distribution in the width direction of the guide chute 20.

The dispersing rods 40 further may include the third row below the lower second row, and the number of dispersing rods of third row 40c may be one more than the number of the dispersing rods of second row 40b, and based on the width direction (y-axis direction), the dispersing rods of second row 40b may be arranged or provided one by one correspondingly between the dispersing rods of third row 40c. In other words, the dispersing rods 40 may include a third row below the lower second row, with the third row having one more rod than the second row, and the rods in the second row positioned between those in the third row along the width direction (y-axis).

For example, the dispersing rods of first row 40a may be provided in two rods to disperse the powder P in the width direction, and the dispersing rods of second row 40b may be provided in three rods, which may be one more than the number of the dispersing rods of first row 40a, to further disperse the powder P in the width direction. The dispersing rods of third row 40c may be provided in four rods, which may be one more than the number of the dispersing rods of second row 40b, to further disperse the powder P in the width direction. That is, the dispersing rods may be arranged in three rows, with the first row having two rods, the second row having three rods, and the third row having four rods, each row dispersing the powder P further in the width direction.

The dispersing rods of first row 40a and the dispersing rods of second row 40b may have substantially the same diameter. The dispersing rods of third row 40c and the dispersing rods of second row 40b may have substantially the same diameter.

The dispersing rods of first row 40a, the dispersing rods of second row 40b, and the dispersing rods of third row 40c may send the powder P falling temporarily and stepwise in the width direction (y-axis direction) and height direction (z-axis direction) of the guide chute 20 in the width direction (y-axis direction) and gently fall along the curved surface of the round rod. Due to the dispersing action of the dispersing rods 40, the powder P may be dispersed and inserted with a more substantially uniform particle size distribution in the width direction (y-axis direction) of the guide chute 20. In other words, the dispersing rods in the first, second, and third rows guide the powder P to fall stepwise in both the width (y-axis) and height (z-axis) directions, resulting in a more uniform particle size distribution in the width direction of the guide chute 20.

The driver 50 may be connected or coupled to the dispersing rods of first row 40a, the dispersing rods of second row 40b, and the dispersing rods of third row 40c with a controller 51, thereby providing torque or vibration force to the dispersing rods of first row 40a, the dispersing rods of second row 40b, and the dispersing rods of third row 40c.

The rotation speed or frequency provided to the dispersing rods of first row 40a, the dispersing rods of second row 40b, and the dispersing rods of third row 40c may prevent or reduce the inserted powder P from adhering to the dispersing rod of first row 40a, the dispersing rod of second row 40b, and the dispersing rods of third row 40c, further enabling substantially uniform particle size distribution of the powder P.

For example, the driver 50 may be a motor, and the controller 51 may be a reducer, so that the rotation speed and frequency may be set differently for each row, and the rotation motion and vibration may be selectively applied for each row.

The rotation speed and frequency may be set differently for each rod among the dispersing rods of first row 40a, the dispersing rods of second row 40b, and the dispersing rods of third row 40c, the rotation motion and vibration may also be selectively applied. That is, the rotation speed and frequency, as well as the application of rotation motion and vibration, may be set differently for each rod in the first, second, and third rows of dispersing rods.

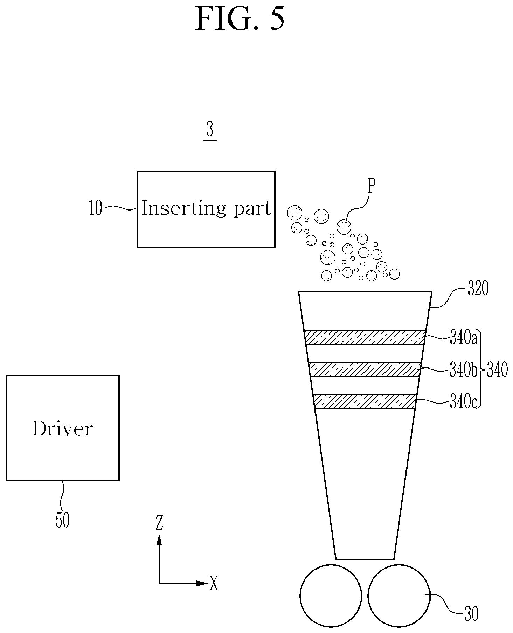

The driver 50 may further provide vibration force to the guide chute 320 (see FIG. 5). The driver 50 may cause the guide chute 320 to vibrate, causing the dispersing rods of first row 40a, the dispersing rods of second row 40b, and the dispersing rods of third row of 40c to rotate or vibrate, enabling a more substantially uniform particle size distribution of the powder P.

The rolling roll 30 may compress the electrode powder P to have a substantially uniform particle size into an electrode member in the form of a sheet having a set or predetermined thickness. The electrode member may be laminated on a current collector to provide a dry electrode of the rechargeable battery. As a result, it may obtain an electrode member using a dry method.

Hereinafter, one or more suitable embodiments of the present disclosure will be described. Compared to the previously described embodiments, descriptions of substantially the same components may not be provided and descriptions of different components are described.

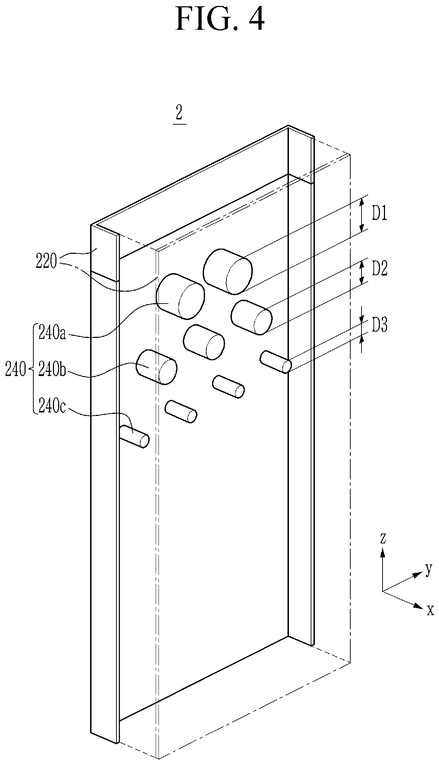

FIG. 4 is an internal perspective view illustrating the guide chute in a dry electrode manufacturing device according to one or more embodiments of the present disclosure. Referring to FIG. 4, in a dry electrode manufacturing device 2 of one or more embodiments, a dispersing rod of first row 240a may have a first diameter D1, and a dispersing rod of second row 240b may have a second diameter D2 smaller than the first diameter D1, and a dispersing rod of third row 240c may have a third diameter D3 smaller than the second diameter D2.

The dispersing rod of first row 240a, the dispersing rod of second row 240b, and the dispersing rod of third row 240c may send the powder P falling temporarily and stepwise in the width direction (y-axis direction) and height direction (z-axis direction) of the guide chute 220 in the width direction (y-axis direction) and gently fall along the curved surface of the round rod. A more substantially uniform particle size distribution of the powder may be in the width direction (y-axis direction) of the guide chute 220 due to the dispersing and adjusting actions of the dispersing rod 240.

At this time, the dispersing rod of first row 240a may have the first diameter D1 and disperse the powder P over the entire width direction (y-axis direction). In the next step (e.g., act or task), the dispersing rod of second row 240b may have the second diameter D2 and disperse the powder over the entire width direction (y-axis direction) by three rods. One dispersing rod of second row 240b may disperse the powder within a narrower range than one dispersing rod of first row 240a.

The dispersing rod of third row 240c may have the second diameter D2 and disperse the powder over the entire width direction (y-axis direction) by four rods. One dispersing rod of third row 240c may disperse the powder within a narrower range than one dispersing rod of second row 240b.

In this way, as the number increases step (e.g., act or task) by step (e.g., act or task) through the upper first row, second row, and third row, the range where one of the dispersing rods 240 disperses the powder may become smaller, and the diameter may decrease. In one or more embodiments, the distance at which the dispersing rods 240 in each row disperse the powder may become smaller, enabling a more substantially uniform particle size distribution across the entire width direction (y-axis direction). That is, the dispersing rods in the first row 240a, second row 240b, and third row 240c may have progressively smaller diameters, enabling a more uniform particle size distribution across the width direction (y-axis) of the guide chute 220.

The dispersing rod 240 of one or more embodiments may be rotated or vibrated by the driver 50, as in one or more embodiments. In this case, the powder P may be adjusted to a more substantially uniform particle size distribution by the first, second, and third diameters D1, D2, and D3 of the dispersing rod 240.

FIG. 5 is a schematic view of a dry electrode manufacturing device according to one or more embodiments of the present disclosure. Referring to FIG. 5, in a dry electrode manufacturing device 3 of one or more embodiments, the driver 50 may be connected or coupled to the guide chute 320 and provide vibration force to the guide chute 320.

By the driver 50, as the guide chute 320 vibrates, the powder P may be adjusted to a more substantially uniform particle size distribution in addition to the powder P dispersing and adjusting action of a dispersing rod of first row 340a, a dispersing rod of second row 340b, and a dispersing rod of third row 340c. That is, the driver 50 may be connected to the guide chute 320 to provide vibration, which, along with the dispersing action of the rods in the first, second, and third rows, helps achieve a more uniform particle size distribution of the powder P.

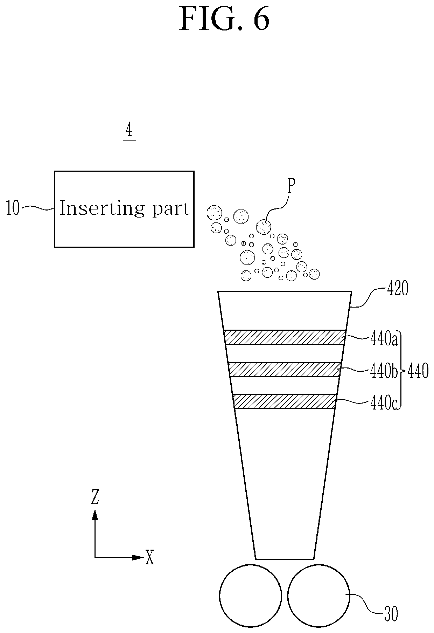

FIG. 6 is a schematic view of a dry electrode manufacturing device according to one or more embodiments of the present disclosure. Referring to FIG. 6, a dry electrode manufacturing device 4 of one or more embodiments may include the inserting part 10, a guide chute 420, a dispersing rod 440, and the rolling roll 30 to uniformly (e.g., substantially uniformly) disperse the powder P for manufacturing a dry electrode to manufacture a dry electrode for a rechargeable battery.

The dispersing rod 440 may be installed (or provided or arranged) in the guide chute 420 to disperse the electrode powder P to adjust the particle size distribution, and may be made of a magnetic material. For example, the dispersing rod 440 may be of a permanent magnet.

The dispersing rod 440 may be installed (or provided or arranged) in the guide chute 420 and may be configured or provided to distribute and adjust the electrode powder P to a substantially uniform particle size. The dispersing rod 440 may be installed (or provided or arranged) in the guide chute 420 and disperse the electrode powder P falling from the inserting part 10 to the rolling roll 30 in the width direction (y-axis direction). At this time, the dispersing rod 440 may attach metal foreign substances (e.g., undesirable metal impurities) contained in the powder P. Therefore, the dry powder P from which metal foreign substances (e.g., undesirable metal impurities) have been removed may be dispersed and inserted with a substantially uniform particle size distribution in the width direction (y-axis direction).

A dispersing rod of first row 440a, a dispersing rod of second row 440b, and a dispersing rod of third row 440c may send the powder P, from which metal foreign substances (e.g., undesirable metal impurities) have been removed by falling temporarily and stepwise in the width direction (y-axis direction) and height direction (z-axis direction) of the guide chute 420, in the width direction (y-axis direction), and may gently fall the powder P along the curved surface of the round rod. The powder P, from which metal foreign substances (e.g., undesirable metal impurities) have been removed in the width direction (y-axis direction) of the guide chute 420 by the dispersing action and metal foreign substances (e.g., undesirable metal impurities) removal action of the dispersing rod 440, may be dispersed and inserted with a more substantially uniform particle size distribution. That is, the dispersing rod 440, made of a magnetic material, may be installed in the guide chute 420 to uniformly disperse the electrode powder P and remove metal impurities, resulting in a more uniform particle size distribution.

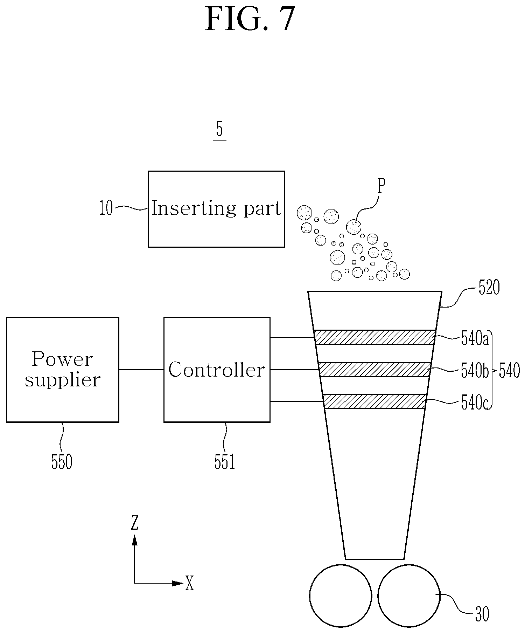

FIG. 7 is a schematic view of a dry electrode manufacturing device according to one or more embodiments of the present disclosure. Referring to FIG. 7, a dry electrode manufacturing device 5 of one or more embodiments may further include a power supplier 550 in addition to the dry electrode manufacturing device 4 of one or more embodiments. The power supplier 550 may be connected or coupled to a dispersing rod 540 and to supply power to the dispersing rod 540 to provide the dispersing rod 540 into an electromagnet.

The power supplier 550 may be connected or coupled to a dispersing rod of first row 540a, a dispersing rod of second row 540b, and a dispersing rod of third row 540c with a controller 551. The controller 551 may distribute the power supplied from the power supplier 550 to the dispersing rod of first row 540a, the dispersing rod of second row 540b, and the dispersing rod of third row 540c.

The power distributed to the dispersing rod of first row 540a, the dispersing rod of second row 540b, and the dispersing rod of third row 540c may form or provide the dispersing rod of first row 540a, the dispersing rod of second row 540b, and the dispersing rod of third row 540c into electromagnets, causing metal foreign substances contained in the powder P to attach to each rod.

In one or more embodiments, the powder P passing through the dispersing rod 540 may not contain metal foreign substances, thereby making the particle size distribution of the powder P more substantially uniform. The quality of the electrode member of the dry electrode made from the powder P may be improved or enhanced.

For example, the power supplier 550 may include the controller 551 to distribute power differently to each row to create different strengths of magnetic force for each row. The strength of the magnetic force may be set differently by distributing power differently for each rod in the dispersing rod of first row 540a, the dispersing rod of second row 540b, and the dispersing rod of third row 540c. Therefore, metal foreign substances contained in the powder P may be effectively removed. That is, the power supplier 550, equipped with a controller 551, distributes power to the dispersing rods 540a, 540b, and 540c, creating varying magnetic forces to effectively remove metal foreign substances from the powder P, thereby advantageously enhancing the quality of the dry electrode.

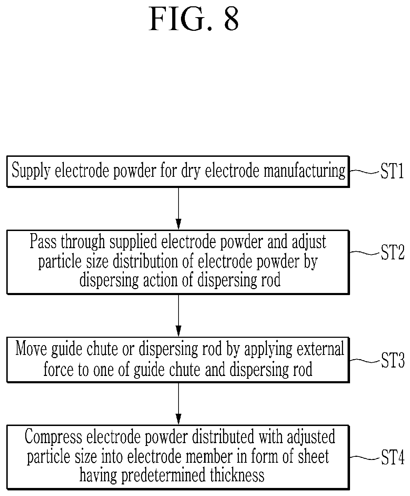

FIG. 8 is a flowchart of a dry electrode manufacturing method according to one or more embodiments of the present disclosure. Referring to FIG. 8, the dry electrode manufacturing method of one or more embodiments may include a first step (e.g., act or task) (ST1), a second step (e.g., act or task) (ST2), a third step (e.g., act or task) (ST3), and a fourth step (e.g., act or task) (ST4). For convenience, the description will be made with reference to the dry electrode manufacturing device 1 of one or more embodiments according to FIGS. 1-3.

In the first step (e.g., act or task) (ST1), electrode powder P for dry electrode manufacturing may be supplied. In the first step (e.g., act or task) (ST1), the electrode powder P may be inserted from the top of the rolling roll 30 to maintain the height H1 at a set level with the width W corresponding to the length L1 of the rolling part 31.

In the second step (e.g., act or task) (ST2), the particle size distribution of the electrode powder P may be adjusted by the dispersing action of the dispersing rod 40 while passing the supplied electrode powder P. In the second step (e.g., act or task) (ST2), a plurality of dispersing rods 40 provided in the guide chute 20 along a width direction (y-axis direction) and a height direction (z-axis direction) may continuously disperse the electrode powder P along the height direction of the guide chute 20 to adjust the particle size distribution.

In one or more embodiments, in the second step (e.g., act or task) (ST2), one dispersing rod 40 may spread the electrode powder P over a wide range in the width direction (y-axis direction) above the guide chute 20 in the height direction (z-axis direction), and one dispersing rod 40 may disperse the electrode powder P in a range that becomes narrower in the width direction as it goes downward in the height direction. Because the number of dispersing rods 40 increases downward, the electrode powder P may be dispersed over the entire width direction (y-axis direction).

In the third step (e.g., act or task) (ST3), the guide chute 20 or the dispersing rod 40 may be moved by applying an external force to one of the guide chute 20 of the dispersing rod 40. The guide chute 20 or the dispersing rod 40 may be moved by an external force to disperse the powder P in the width direction of the guide chute 20. At this time, the particle size distribution of the electrode powder P may be adjusted.

In the third step (e.g., act or task) (ST3), the driver 50 may provide torque or vibration force to the dispersing rod 40, causing the dispersing rod 40 to rotate or vibrate. Therefore, the dispersing rod 40 may rotate or vibrate to adjust the particle size distribution of the powder P.

In one or more embodiments, the description will be made with reference to the dry electrode manufacturing device 3 of one or more embodiments according to FIG. 5. Additionally, in the third step (e.g., act or task) (ST3), the driver 50 may be connected or coupled to the guide chute 320 and further provide vibration force to the guide chute 320. Therefore, as the guide chute 320 vibrates, the guide chute 320 may adjust the particle size distribution of the powder P in addition to dispersing action of the powder P.

In the fourth step (e.g., act or task) (ST4), the electrode powder P having an adjusted particle size may be compressed into an electrode member in the form of a sheet having a set or predetermined thickness. The electrode member may be laminated on a current collector to provide a dry electrode of the rechargeable battery. As a result, a dry electrode may be obtained through the dry electrode manufacturing method of one or more embodiments.

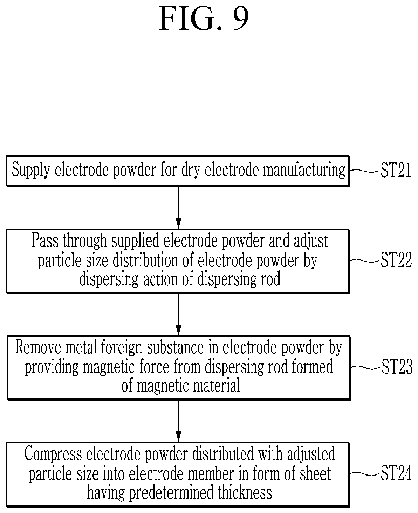

FIG. 9 is a flowchart of a dry electrode manufacturing method according to one or more embodiments of the present disclosure. Referring to FIG. 9, the dry electrode manufacturing method of one or more embodiments may include a first step (e.g., act or task) (ST21), a second step (e.g., act or task) (ST22), a third step (e.g., act or task) (ST23), and a fourth step (e.g., act or task) (ST24). For convenience, the description will be made with reference to the dry electrode manufacturing device 4 of one or more embodiments according to FIG. 6.

In the first step (e.g., act or task) (ST21), electrode powder P for dry electrode manufacturing may be supplied. In the first step (e.g., act or task) (ST21), the electrode powder P may be inserted from the top of the rolling roll 30 to maintain the height H1 at a set level with the width W corresponding to the length L1 of the rolling part 31 (see FIG. 2).

In the second step (e.g., act or task) (ST22), the particle size distribution of the electrode powder P may be adjusted by the dispersing action of the dispersing rod 440 while passing the supplied electrode powder P. In the second step (e.g., act or task) (ST22), a plurality of dispersing rods 440 provided in the guide chute 420 along a width direction (y-axis direction) and a height direction (z-axis direction) may continuously disperse the electrode powder P along the height direction of the guide chute 420 to adjust the particle size distribution.

In one or more embodiments, in the second step (e.g., act or task) (ST22), one dispersing rod 440 may spread the electrode powder P over a wide range in the width direction (y-axis direction) above the guide chute 420 in the height direction (z-axis direction), and one dispersing rod 440 may disperse the electrode powder P in a range that becomes narrower in the width direction as it goes downward in the height direction. Because the number of dispersing rods 440 increases downward, the electrode powder P may be dispersed over the entire width direction (y-axis direction).

In the third step (e.g., act or task) (ST23), metal foreign substances (e.g., undesirable metal impurities) in the powder P may be removed by providing magnetic force from the dispersing rod 440 of a magnetic material. At this time, the dispersing rod 440 may provide magnetic force to remove metal foreign substances (e.g., undesirable metal impurities) contained in the powder P and adjust the particle size distribution of the powder P.

In one or more embodiments, the description will be made with reference to the dry electrode manufacturing device 5 of one or more embodiments according to FIG. 7. Additionally, in the third step (e.g., act or task) (ST23), the power supplier 550 may supply power to the dispersing rod 540 so that the dispersing rod 540 may have magnetic force. At this time, the dispersing rod 540 may provide magnetic force to attach metal foreign substances contained in the powder P. Therefore, the powder P from which metal foreign substances have been removed may be dispersed with a particle size distribution adjusted in the width direction (y-axis direction).

In one or more embodiments, the powder P passing through the dispersing rod 540 may not contain metal foreign substances (e.g., undesirable metal impurities), thereby making the particle size distribution of the powder P more substantially uniform. The quality of the electrode member of the dry electrode made from the powder P may be improved or enhanced.

In the fourth step (e.g., act or task) (ST24), the electrode powder P having an adjusted particle size may be compressed into an electrode member in the form of a sheet having a set or predetermined thickness. The electrode member may be laminated on a current collector to provide a dry electrode of the rechargeable battery. As a result, a dry electrode may be obtained through the dry electrode manufacturing method of one or more embodiments.

In the present disclosure, if (e.g., when) cross-sections of the rods are circular, "diameter" or "rod diameter" indicates a circular diameter or an average circular diameter, and if (e.g., when) the cross-sections of the rods are non-circular, the "diameter" or "rod diameter" indicates a major axis length or an average major axis length.

A battery manufacturing device, a management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the subject matter of the present disclosure has been described in connection with what is presently considered to be practical embodiments, it is to be understood that embodiments of the present disclosure are not limited to the disclosed embodiments, but, on the contrary, are intended to cover one or more suitable modifications and equivalent arrangements included within the scope of the appended claims and equivalents thereof.

**Reference Numerals**

| | | | |
|---|---|---|---|
| 1, 2, 3, 4, 5: | Dry electrode manufacturing device | 10: | Inserting part |
| 20, 220, 320, 420, 520: | Guide chute | 30: | Rolling roll |
| 40, 240, 340, 440, 540: | Dispersing rod | | |
| 40a, 240a, 340a, 440a, 540a: | Dispersing rod of first row | | |
| 40b, 240b, 340b, 440b, 540b: | Dispersing rod of second row | | |
| 40c, 240c, 340c, 440c, 540c: | Dispersing rod of third row | | |
| 50: | Driver | 51, 551: | Controller |
| 550: | Power supplier | D1: | First diameter |
| D2: | Second diameter | D3: | Third diameter |
| H, H1: | Height | L, L1: | Length |
| P: | Powder | W: | Width |

## Claims

1. A dry electrode manufacturing device (1, 2, 3, 4, 5), comprising:
an inserting part (10) to supply electrode powder (P) for dry electrode manufacturing;
a guide chute (20, 220, 320, 420) to pass through the electrode powder (P) supplied from the inserting part (10);
a dispersing rod (40, 240, 440, 540, 540a, 540b, 540c) that is provided in the guide chute (20, 220, 320, 420) to disperse the electrode powder (P) and adjust particle size distribution;
a driver (50) to move at least one selected from among the guide chute (20, 220, 320, 420) and the dispersing rod (40, 240, 440, 540, 540a, 540b, 540c) by applying an external force; and
a rolling roll (30) to compress the electrode powder (P) of the adjusted particle size distribution via the guide chute (20, 220, 320, 420) and the dispersing rod (40, 240, 440, 540, 540a, 540b, 540c) into an electrode member in the form of a sheet having a set thickness.

2. The dry electrode manufacturing device (1, 2, 3, 4, 5) as claimed in claim 1, wherein
the driver (50) is connected to the dispersing rod (40, 240, 440, 540, 540a, 540b, 540c) and to provide torque or vibration force to the dispersing rod (40, 240, 440, 540, 540a, 540b, 540c).

3. The dry electrode manufacturing device (1, 2, 3, 4, 5) as claimed in claim 2, wherein
the driver (50) is further to provide vibration force to the guide chute (20, 220, 320, 420).

4. The dry electrode manufacturing device (1, 2, 3, 4, 5) as claimed in claims 1 to 3, wherein
the dispersing rod (40, 240, 440, 540, 540a, 540b, 540c) is of a round rod or a triangular rod.

5. The dry electrode manufacturing device (1, 2, 3, 4, 5) as claimed in claims 1 to 4, wherein
a plurality of dispersing rods (40, 240, 440, 540, 540a, 540b, 540c) comprising the dispersing rod (40, 240, 440, 540, 540a, 540b, 540c) and are arranged with each other along a width direction of the guide chute (20, 220, 320, 420).

6. The dry electrode manufacturing device (1, 2, 3, 4, 5) as claimed in claims 1 to 5, wherein
a plurality of dispersing rods (40, 240, 440, 540, 540a, 540b, 540c) comprising the dispersing rod (40, 240, 440, 540, 540a, 540b, 540c) and are arranged with each along a height direction of the guide chute (20, 220, 320, 420).

7. The dry electrode manufacturing device (1, 2, 3, 4, 5) as claimed in claims 1 to 6, wherein
a plurality of dispersing rods (40, 240, 440, 540, 540a, 540b, 540c) comprising the dispersing rod (40, 240, 440, 540, 540a, 540b, 540c) comprise at least an upper first row (240a) and at least a lower second row (40b, 240b) spaced from the upper first row (240a) in a height direction of the guide chute (20, 220, 320, 420),
the number of the dispersing rods (40, 240, 440, 540, 540a, 540b, 540c) of the lower second row (40b, 240b) is one more than the number the dispersing rods (40, 240, 440, 540, 540a, 540b, 540c) of the upper first row (240a), and
based on a width direction of the guide chute (20, 220, 320, 420), the dispersing rods (40, 240, 440, 540, 540a, 540b, 540c) of the upper first row (240a) are arranged one by one correspondingly between the plurality of dispersing rods (40, 240, 440, 540, 540a, 540b, 540c) of the lower second row (40b, 240b).

8. The dry electrode manufacturing device (1, 2, 3, 4, 5) as claimed in claim 7, wherein
the dispersing rods (40, 240, 440, 540, 540a, 540b, 540c) of the upper first row (240a) and the dispersing rods (40, 240, 440, 540, 540a, 540b, 540c) of the lower second row (40b, 240b) have the same diameter and/or wherein
the dispersing rods (40, 240, 440, 540, 540a, 540b, 540c) comprising the dispersing rod (40, 240, 440, 540, 540a, 540b, 540c) comprise a third row (240c) below the lower second row (40b, 240b), and
the dispersing rods (40, 240, 440, 540, 540a, 540b, 540c) of the third row (240c) and the dispersing rods (40, 240, 440, 540, 540a, 540b, 540c) of the lower second row (40b, 240b) have the same diameter.

9. The dry electrode manufacturing device (1, 2, 3, 4, 5) as claimed in claim 7, wherein
each of the dispersing rods (40, 240, 440, 540, 540a, 540b, 540c) of the upper first row (240a) has a first diameter (D1), and
each of the dispersing rods (40, 240, 440, 540, 540a, 540b, 540c) of the lower second row (40b, 240b) has a second diameter (D2) smaller than the first diameter (D1) and/or wherein
the dispersing rods (40, 240, 440, 540, 540a, 540b, 540c) comprising the dispersing rod (40, 240, 440, 540, 540a, 540b, 540c) comprise a third row (240c) below the lower second row (40b, 240b), and
each of the dispersing rods (40, 240, 440, 540, 540a, 540b, 540c) of the third row (240c) has a third diameter (D3) smaller than the second diameter (D2).

10. The dry electrode manufacturing device (1, 2, 3, 4, 5) as claimed in claims 1 to 9, wherein
the driver (50) is connected to the guide chute (20, 220, 320, 420) and to provide vibration force to the guide chute (20, 220, 320, 420).

11. A dry electrode manufacturing device (1, 2, 3, 4, 5), comprising:
an inserting part (10) to supply electrode powder (P) for dry electrode manufacturing;
a guide chute (20, 220, 320, 420) to pass through the electrode powder (P) supplied from the inserting part (10);
a dispersing rod (40, 240, 440, 540, 540a, 540b, 540c) that is provided in the guide chute (20, 220, 320, 420) to disperse the electrode powder (P) and adjust particle size distribution; and
a rolling roll (30) to compress the electrode powder (P) of the adjusted particle size distribution via the guide chute (20, 220, 320, 420) and the dispersing rod (40, 240, 440, 540, 540a, 540b, 540c) into an electrode member in the form of a sheet having a set thickness,
wherein the dispersing rod (40, 240, 440, 540, 540a, 540b, 540c) is of a magnetic material.

12. The dry electrode manufacturing device (1, 2, 3, 4, 5) as claimed in claim 11, wherein
the dispersing rod (40, 240, 440, 540, 540a, 540b, 540c) is of a permanent magnet.

13. The dry electrode manufacturing device (1, 2, 3, 4, 5) as claimed in claim 11, further comprising:
a power supplier (550) connected to the dispersing rod (40, 240, 440, 540, 540a, 540b, 540c) and to supply power to the dispersing rod (40, 240, 440, 540, 540a, 540b, 540c) to form the dispersing rod (40, 240, 440, 540, 540a, 540b, 540c) into an electromagnet.

14. A dry electrode manufacturing method, comprising:
supplying electrode powder (P) for dry electrode manufacturing to a guide chute (20, 220, 320, 420) through an inserting part (10);
passing through the electrode powder (P) and adjusting the particle size distribution of the supplied electrode powder (P) by the dispersing action of a dispersing rod (40, 240, 440, 540, 540a, 540b, 540c) provided in the guide chute (20, 220, 320, 420); and
moving at least one selected from among the guide chute (20, 220, 320, 420) and the dispersing rod (40, 240, 440, 540, 540a, 540b, 540c) by applying an external force; and
compressing the electrode powder (P) distributed with an adjusted particle size via the guide chute (20, 220, 320, 420) and the dispersing rod (40, 240, 440, 540, 540a, 540b, 540c) into an electrode member in the form of a sheet having a set thickness on a rolling roll (30) and optionally wherein
in the moving of the at least one selected from among the guide chute (20, 220, 320, 420) and the dispersing rod (40, 240, 440, 540, 540a, 540b, 540c) by applying the external force,
the electrode powder (P) passes while providing torque or vibration force to the dispersing rod (40, 240, 440, 540, 540a, 540b, 540c) and/or wherein
in the moving of the at least one selected from among the guide chute (20, 220, 320, 420) and the dispersing rod (40, 240, 440, 540, 540a, 540b, 540c) by applying the external force,
vibration force is further provided to the guide chute (20, 220, 320, 420).

15. A dry electrode manufacturing method, comprising:
supplying electrode powder (P) for dry electrode manufacturing to a guide chute (20, 220, 320, 420) through an inserting part (10);
passing through the electrode powder (P) and adjusting the particle size distribution of the supplied electrode powder (P) by the dispersing action of a dispersing rod (40, 240, 440, 540, 540a, 540b, 540c) provided in the guide chute (20, 220, 320, 420);
removing metal foreign substances in the electrode powder (P) by providing magnetic force from the dispersing rod (40, 240, 440, 540, 540a, 540b, 540c) of a magnetic material; and
compressing the electrode powder (P) distributed with an adjusted particle size via the guide chute (20, 220, 320, 420) and the dispersing rod (40, 240, 440, 540, 540a, 540b, 540c) into an electrode member in the form of a sheet having a set thickness on a rolling roll (30) and/or wherein
in the removing of the metal foreign substances in the electrode powder (P) by providing the magnetic force from the dispersing rod (40, 240, 440, 540, 540a, 540b, 540c) of the magnetic material,
a power supplier (550) is connected to the dispersing rod (40, 240, 440, 540, 540a, 540b, 540c) and to supply power to the dispersing rod (40, 240, 440, 540, 540a, 540b, 540c) to form the dispersing rod (40, 240, 440, 540, 540a, 540b, 540c) into an electromagnet.
